# EUROPÄISCHE PATENTSCHRIFT

(11) **EP 1 881 249 B1**
(45) Veröffentlichungstag und Bekanntmachung des Hinweises auf die Patenterteilung: **05.11.2008**
(21) Anmeldenummer: 06015103.2
(22) Anmeldetag: 20.07.2006
(51) Int. Cl.: F16K 37/00

(54) **Ventilbaugruppe mit Anzeigevorrichtung für Ventilinformationen**
Valve system with data display means
Soupape avec dispositif d'affichage de données

(43) Veröffentlichungstag der Anmeldung: 23.01.2008
(73) Patentinhaber: FESTO AG & Co. KG, 73734 Esslingen (DE)
(72) Erfinder: Berner, Michael, 73230 Kirchheim (DE)
(74) Vertreter: Vetter, Hans

(56) Entgegenhaltungen:
- EP-A2- 0 624 832
- US-A- 4 217 647
- US-A- 4 573 114
- US-A- 4 760 547
- US-A- 6 125 868
- US-A1- 2006 032 537
- US-B1- 6 283 138

## Beschreibung

Die Erfindung betrifft eine Ventilbaugruppe mit einer Anzeigevorrichtung für Ventilinformationen mit den Merkmalen des Oberbegriffs des Anspruchs 1.

Bei einer Vielzahl von Ventilen einer Ventilbaugruppe ist es erforderlich, die Ventile zu kennzeichnen. Dies erfolgt entweder mit entsprechend beschrifteten Schildchen an den Ventilen oder durch Nummerierung, wobei dann schriftliche Unterlagen mit herangezogen werden müssen, um Informationen über das jeweils nummerierte Ventil zu erhalten. Ändern sich die Konfiguration oder die angeschlossenen Bauteile und Baugruppen, so müssen diese Unterlagen entsprechend geändert werden. Dasselbe gilt für die beschrifteten Schildchen. Neben dem Erfordernis einer ständigen Aktualisierung besteht ein weiterer Nachteil der Schildchen darin, dass sie häufig zu klein sind, um die erforderlichen Informationen zu enthalten, insbesondere bei sehr kleinbauenden ventilen. Bei den schriftlichen Unterlagen besteht der Nachteil, dass sie häufig nicht zur Hand sind oder gar verwechselt werden.

Aus der US 4,573,114 ist eine Ventilbaugruppe mit den Merkmalen des Oberbegriffs des Anspruchs 1 bekannt. Die einzelnen Ventile sind dabei über Leitungen mit einem Elektronikmodul verbunden, das eine Speichereinrichtung, einen Computer und ein Display für Ventilinformationen enthält. Infolge der Leitungsverbindung muss dieses Elektronikmodul ortsfest positioniert sein, entweder in einem anderen Raum oder im Bereich der Ventilbaugruppe, so dass das Ablesen von Ventilinformationen jeweils dort erfolgen muss.

Ähnliche Probleme liegen bei der aus der US 2006/0032537 A1 bekannten Ventilbaugruppe vor. Dort ist die Anzeigevorrichtung direkt an der Ventilbaugruppe angeordnet.

Eine Aufgabe der vorliegenden Erfindung besteht darin, eine Anzeigevorrichtung für Ventilinformationen von Ventilen einer Ventilbaugruppe zu schaffen, die auch ausführlichere Ventilinformationen unabhängig von der Baugröße des jeweiligen Ventils anzeigen kann und die keiner ständigen Aktualisierung bedarf.

Diese Aufgabe wird erfindungsgemäß durch eine Ventilbaugruppe mit Anzeigevorrichtung für Ventilinformationen mit den Merkmalen des Anspruchs 1 gelöst.

Ein wesentlicher Vorteil der erfindungsgemäßen Lösung besteht zunächst darin, dass keine Schildchen an den Ventilen oder schriftliche Unterlagen zur Erlangung der Ventilinformationen erforderlich sind. Die elektronisch in der Ventilbaugruppe gespeicherten Ventilinformationen können in einfacher Weise durch ein tragbares Anzeigegerät mit Display abgerufen werden. Über eine elektrische Signalauslöseeinrichtung können die gewünschten Informationen abgerufen und auf dem Display wiedergegeben werden. Dabei wird nur ein einziges Anzeigegerät auch bei einer größeren Zahl von Ventilbaugruppen benötigt. Verwechslungen von Ventilinformationen können praktisch nicht mehr auftreten, da gezielt Informationen einzelner Ventile abgerufen werden können, die in der jeweiligen Ventilbaugruppe gespeichert sind. Durch ein entsprechend großes Display kann jedem Ventil eine Vielzahl von Daten zugeordnet werden, wobei auch bei einem kleineren Display die Daten nacheinander abgerufen werden können. In vorteilhafter Weise ist die Datenübertragungseinrichtung zur drahtlosen Übertragung der Ventilinformationen, insbesondere für Funksignale oder Infrarotsignale oder Bluetooth-Signale, ausgebildet, wobei die Ventilbaugruppe hierzu im einfachsten Falle ein Sendemodul und das als vom Elektronikmodul getrenntes tragbares Gerät ausgebildete Anzeigegerät ein entsprechendes Empfangsmodul als Datenübertragungseinrichtung besitzt.

Durch die in den Unteransprüchen aufgeführten Maßnahmen sind vorteilhafte Weiterbildungen und Verbesserungen der im Anspruch 1 angegebenen Ventilbaugruppe mit Anzeigevorrichtung möglich.

Bevorzugt sind das Sendemodul und das Empfangsmodul als Sende-/ Empfangsmodule ausgebildet, um eine Datenübertragung in beiden Richtungen zu ermöglichen.

Zweckmäßigerweise besitzt dabei das Elektronikmodul eine drahtgebundene oder drahtlose Schnittstelle zur Datenübertragung mit oder seitens einer externen Zentralstation, die insbesondere zur Konfigurierung der Ventilbaugruppe und/oder des Elektronikmoduls ausgebildet ist. Dadurch kann das Elektronikmodul in einheitlicher Bauweise mit Ventilen unterschiedlicher Bauart und Anzahl zu einer Ventilbaugruppe zusammengefasst werden.

Ein Konfigurationsprogramm für die Konfigurationseinrichtung liegt grundsätzlich immer vor, um eine Anpassung an die jeweiligen Ventile und die daran angeschlossenen Aktoren und Sensoren vorzunehmen. In vorteilhafter Weise enthält dabei das Elektronikmodul Mittel zur Bildung der Ventilinformationen aus dem Konfigurationsprogramm, die dann der Anzeigevorrichtung übermittelt werden können. Durch diese automatisch funktionierenden Mittel ist eine einzelne Eingabe von Ventilinformationen nicht mehr erforderlich.

Die Signalauslöseeinrichtung weist bevorzugt ein insbesondere als Bedientaste ausgebildetes Bedienelement am Elektronikmodul zur Auslösung der Übertragung der Ventilinformationen oder einer Übersicht über die Ventilinformationen auf. Alternativ oder zusätzlich besitzt die Signalauslöseeinrichtung noch ein insbesondere als Bedientaste ausgebildetes Bedienelement an jedem Ventil zur Auslösung der Übertragung der dem jeweiligen Ventil zugeordneten ventilinformationen. Dadurch können in vorteilhafter Weise die Ventilinformationen des jeweiligen Ventils durch Betätigung der zugeordneten Bedientaste und/oder die Übertragung aller Informationen durch Betätigung der Bedientaste am Elektronikmodul ausgelöst werden.

Als alternative oder zusätzliche Möglichkeit kann die Signalauslöseeinrichtung auch wenigstens ein Bedienelement, insbesondere eine Bedientaste, am tragbaren Anzeigegerät zur Auslösung der Übertragung von den einzelnen Ventilen zugeordneten Ventilinformationen oder aller ventilinformationen aufweisen. Bei mehreren Bedienelementen können dann gezielt Einzelinformationen abgerufen werden.

Das Sendemodul der Ventilbaugruppe kann als separates Modul ausgebildet oder im Elektronikmodul integriert sein.

Die Ventilinformationen enthalten bevorzugt eine oder mehrere der folgenden Informationen: am jeweiligen Ventil angeschlossener Aktor, am jeweiligen Ventil angeschlossene Sensoreinrichtung, Typ und Kennzeichnung des jeweiligen Ventils, Konfiguration des jeweiligen Ventils.

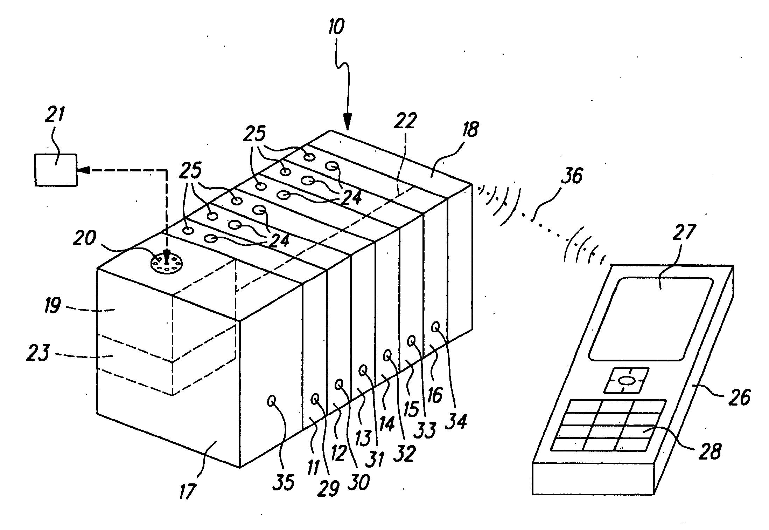

Ein Ausführungsbeispiel der Erfindung ist in der Zeichnung dargestellt und in der nachfolgenden Beschreibung näher erläutert. Die einzige Figur zeigt in perspektivischer Darstellung eine Ventilbaugruppe und eine mit einem Display versehene separate Anzeigevorrichtung für Ventilinformationen.

Die in der einzigen Figur dargestellte Ventilbaugruppe 10 besteht aus sechs jeweils mit ihren Flachseiten aneinanderliegenden, in Reihe angeordneten Ventilen 11-16, die als Plattenventile ausgebildet sind. An der einen endseitigen Stirnseite ist ein Elektronikmodul 17 und an der entgegengesetzten endseitigen Stirnseite ein Sende-/Empfangsmodul 18 angeordnet. Das Sende-/Empfangsmodul 18 kann prinzipiell auch im Elektronikmodul 17 integriert sein. Die fluidischen Ventile 11-16 können anstelle von Plattenventilen auch andere bekannte Bauformen aufweisen.

Im Elektronikmodul 17 ist eine elektronische Steuer- und/oder Konfigurationseinrichtung 19 für die Ventile 11-16 angeordnet, die über eine beispielsweise als Busschnittstelle ausgebildete Schnittstelle 20 mit einer externen Zentralstation 21 verbindbar ist. Die Verbindung zur Datenübertragung kann als Busleitungsanordnung ausgebildet sein oder auch drahtlos, beispielsweise über Funk, erfolgen. In diesem Falle ist die Schnittstelle 20 als drahtlose Sende-/Empfangseinrichtung ausgebildet. Die Steuer- und/oder Konfigurationseinrichtung 19 kann über die Zentralstation 21 programmiert werden, wobei prinzipiell eine Schnittstelle 20 auch an ein anderes Programmiergerät anschließbar ist. Dabei kann das Elektronikmodul 17 in nicht dargestellter Weise auch ein Display und/oder Bedienungselemente aufweisen.

Die Steuer- und/oder Konfigurationseinrichtung 19 dient zur Steuerung der Ventile 11-16 und ist mit diesen über eine Steuerleitungsanordnung 22 verbunden, die beispielsweise als Busleitung ausgebildet ist. Zur Speicherung der jeweiligen Konfiguration ist die Steuer- und/oder Konfigurationseinrichtung 19 mit einer Speichereinrichtung 23 verbunden.

Die Ventile 11-16 besitzen jeweils schematisch dargestellte Fluidikanschlüsse 24 zur Verbindung mit nicht dargestellten Aktoren, die durch die jeweiligen Ventile gesteuert werden sollen. Weiterhin besitzen die Ventile 11-16 jeweils Sensoranschlüsse 25 zum Anschluss von Sensoren oder zur Übertragung von sonstigen Rückmeldungen seitens der angeschlossenen Aktoren. Die Fluidikanschlüsse 24 und die Sensoranschlüsse 25 können selbstverständlich auch an anderen Stellen der Ventile 11-16 angeordnet sein.

Die fluidischen Zuführungen, Abführungen, Verbindungsleitungen und dergleichen sind zur Vereinfachung nicht dargestellt.

Ein separates tragbares Anzeigegerät 26 besitzt ein Display 27 und als Tastatur ausgebildete Bedienungselemente 28. Weiterhin besitzt das Anzeigegerät 26 intern ein Sende-/Empfangsmodul, das mit dem Sende-/Empfangsmodul 18 der Ventilbaugruppe 10 drahtlos kommunizieren kann, beispielsweise durch Funksignale, Infrarotsignale oder Bluetooth-Signale.

In der Speichereinrichtung 23 sind Ventilinformationen für alle Ventile 11-16 enthalten. Bei diesen Ventilinformationen handelt es sich beispielsweise um Informationen über die jeweils angeschlossenen Aktoren, angeschlossenen Sensoreinrichtungen, Typ und Kennzeichnung des jeweiligen Ventils, Konfiguration des jeweiligen Ventils und dergleichen. Diese Informationen werden entweder über die Schnittstelle 20 seitens der Zentralstation 21 oder eines Programmiergeräts eingegeben oder über eine eigene Tastatur des Elektronikmoduls 17, sofern dieses eine solche besitzt. Die Ventilinformationen können auch automatisch aus dem jeweiligen Konfigurationsprogramm, das in der Steuer- und/oder Konfigurationseinrichtung 19 enthalten ist, generiert werden.

Um die Übertragung der Ventilinformationen auszulösen, ist an jedem Ventil 11-16 eine Bedientaste 29-34 als Signalauslöseeinrichtung angeordnet. Auch am Elektronikmodul 17 ist eine solche Bedientaste 35 angeordnet. Die Betätigung einer Bedientaste 29-34 an einem bestimmten Ventil 11-16 löst die Übertragung der diesem Ventil entsprechenden Ventilinformationen über das Sende-/Empfangsmodul 18 zum Anzeigegerät 26 hin aus, wo sie auf dem Display 27 wiedergegeben werden. Bei Betätigung der Bedientaste 35 am Elektronikmodul 17 werden die Ventilinformationen sämtlicher Ventile 11-16 auf das Anzeigegerät 26 übertragen. Dies kann entweder sequenziell erfolgen oder als Übersicht, wobei einzelne Teilinformationen dann entweder automatisch angezeigt werden oder nach Betätigung entsprechender Bedienungselemente 28 des Anzeigegeräts 26.

Bei einer einfacheren Ausführung kann auch nur die Bedientaste 35 am Elektronikmodul 17 vorgesehen sein, oder es sind nur die Bedientasten 29-34 an den Ventilen 11-16 angeordnet.

Eine dritte Möglichkeit zur Übertragung der Ventilinformationen besteht darin, auf alle Bedientasten 29-35 an der Ventilbaugruppe 10 zu verzichten und diese Ventilinformationen durch Betätigung von Bedienungselementen 28 am Anzeigegerät 26 abzurufen. Nur in diesem Falle muss eine Datenübertragung nach beiden Richtungen vorgesehen sein, während im anderen Falle, also bei Auslösung der Datenübertragung, ausschließlich durch die Bedientasten 29-35 anstelle eines Sende-/Empfangsmoduls 18 ein einfacheres Sendemodul vorgesehen sein kann, wobei dann im Anzeigegerät 26 nur ein entsprechendes Empfangsmodul untergebracht sein muss.

Das Abrufen der Ventilinformationen durch die Bedienungselemente 28 am Anzeigegerät 26 kann gezielt bezüglich einzelner Ventile erfolgen, oder die gesamten Ventilinformationen aller Ventile 11-16 können sequenziell oder gleichzeitig übertragen werden, wobei auch zunächst eine Übersichtsansicht angezeigt werden kann, die die prinzipielle Konfigurationen der einzelnen Ventile zeigt.

Die drahtlose Datenübertragung kann auch über ein Transpondersystem erfolgen, wobei dann entweder jedem Ventil 11-16 ein Transponder zugeordnet wird, oder ein alle Informationen enthaltender Transponder ist im Elektronikmodul 17 enthalten. In diesem Falle können die Bedientasten 29-35 entfallen, und das Abrufen der Ventilinformationen erfolgt ausschließlich über die Bedienungselemente 28 des Anzeigegeräts 26.

zusätzlich zum Display 27 kann die Wiedergabe der Ventilinformationen auch akustisch erfolgen. Hierzu ist im Elektronikmodul 17 und/oder im Anzeigegerät 26 eine akustische Wiedergabeeinrichtung angeordnet.

## Patentansprüche

1. Ventilbaugruppe bestehend aus mehreren Ventilen mit einer elektronischen Speichereinrichtung (23) für Ventilinformationen, die mit einer Datenübertragungseinrichtung zur Übertragung der Ventilinformationen an ein mit einem Display (27) als Anzeigevorrichtung für die Ventilinformationen versehenes Anzeigegerät (26) in Wirkverbindung steht, wobei wenigstens eine elektrische Signalauslöseeinrichtung (29-35; 28) zur Erzeugung von Auslösesignalen für die Übertragung der Ventilinformationen oder von einzelnen Ventilen (11-16) zugeordneten Ventilinformationen vorgesehen ist, und mit einem Elektronikmodul (17), das die Speichereinrichtung (23) und eine Steuer- und/oder Konfigurationseinrichtung (19) für die Ventile (11-16) enthält, **dadurch gekennzeichnet, dass** die Ventilbaugruppe (10) ein Sendemodul (18) und das als vom Elektronikmodul (17) getrenntes tragbares Gerät ausgebildete Anzeigegerät (26) ein entsprechendes Empfangsmodul als drahtlose Datenübertragungseinrichtung zur drahtlosen Übertragung der ventilinformationen besitzt.

2. Ventilbaugruppe nach Anspruch 1, **dadurch gekennzeichnet, dass** das Sendemodul (18) und das Empfangsmodul als Sende-/Empfangsmodule ausgebildet sind.

3. Ventilbaugruppe nach Anspruch 1 oder 2, **dadurch gekennzeichnet, dass** das Sendemodul (18) und das Empfangsmodul zur Übertragung mittels Funksignalen oder Infrarotsignalen oder Bluetooth-Signalen ausgebildet sind.

4. Ventilbaugruppe nach einem der vorhergehenden Ansprüche, **dadurch gekennzeichnet, dass** das Sendemodul (17) eine drahtgebundene oder drahtlose Schnittstelle (20) zur Datenübertragung mit oder seitens einer externen Zentralstation (21) besitzt, die insbesondere zur Konfigurierung der Ventilbaugruppe (10) und/oder des Elektronikmoduls (17) ausgebildet ist.

5. Ventilbaugruppe nach einem der vorhergehenden Ansprüche **dadurch gekennzeichnet, dass** Mittel zur Bildung der Ventilinformationen aus dem Konfigurationsprogramm für die Steuer- und/oder Konfigurationseinrichtung (19) vorgesehen sind, insbesondere Programmmittel.

6. Ventilbaugruppe nach einem der vorhergehenden Ansprüche, **dadurch gekennzeichnet, dass** die Signalauslöseeinrichtung ein insbesondere als Bedientaste ausgebildetes Bedienelement (35) am Elektronikmodul (17) zur Auslösung der Übertragung der ventilinformationen oder einer Übersicht über die Ventilinformationen aufweist.

7. Ventilbaugruppe nach einem der vorhergehenden Ansprüche, **dadurch gekennzeichnet, dass** die Signalauslöseeinrichtung ein insbesondere als Bedientaste ausgebildetes Bedienelement (29-34) an jedem Ventil (11-16) zur Auslösung der Übertragung der dem jeweiligen Ventil zugeordneten Ventilinformationen aufweist.

8. Ventilbaugruppe nach einem der vorhergehenden Ansprüche, **dadurch gekennzeichnet, dass** die Signalauslöseeinrichtung wenigstens ein Bedienelement (28), insbesondere wenigstens eine Bedientasten, am tragbaren Anzeigegerät (26) zur Auslösung der Übertragung von den einzelnen Ventilen (11-16) zugeordneten Ventilinformationen oder aller Ventilinformationen aufweist.

9. Ventilbaugruppe nach einem der vorhergehenden Ansprüche, **dadurch gekennzeichnet, dass** ihr Sendemodul(18) als separates Modul ausgebildet oder im Elektronikmodul (17) integriert ist.

10. Ventilbaugruppe nach einem der vorhergehenden Ansprüche, **dadurch gekennzeichnet, dass** die Ventile (11-16) als in Reihe angeordnete Ventile, insbesondere als Plattenventile ausgebildet sind.

11. Ventilbaugruppe nach Anspruch 10, **dadurch gekennzeichnet, dass** das Elektronikmodul (17) an den Ventilen (11-16) angereiht ist.

12. Ventilbaugruppe nach einem der vorhergehenden Ansprüche, **dadurch gekennzeichnet, dass** die Ventilinformationen eine oder mehrere der folgenden Informationen enthalten: am jeweiligen Ventil angeschlossener Aktor, am jeweiligen Ventil angeschlossene Sensoreinrichtung, Typ und Kennzeichnung des jeweiligen Ventils, Konfiguration des jeweiligen Ventils.

## Claims

1. Valve assembly comprising a plurality of valves, with an electronic storage device (23) for valve data, which is operatively connected to a data transmission device for the transmission of the valve data to an indicating device (26) provided with a display (27) as an indicating unit for the valve data, wherein at least one electric signal triggering device (29-35; 28) is provided for the generation of trigger signals for the transmission of the valve data or of valve data assigned to individual valves (11-16), and with an electronic module (17) containing the storage device (23) and a control/and or configuration unit (19) for the valves (11-16), **characterised in that** the valve assembly (10) comprises a transmitter module (18) and the indicating device (26) designed as a portable unit separate from the electronic module (17) comprises a corresponding receiver module as a wireless data transmission device for the wireless transmission of the valve data.

2. Valve assembly according to claim 1, **characterised in that** the transmitter module (18) and the receiver module are designed as transceiver modules.

3. Valve assembly according to claim 1 or 2, **characterised in that** the transmitter module (18) and the receiver module are designed for transmission by means or radio signals or infrared signals or Bluetooth signals.

4. Valve assembly according to any of the preceding claims, **characterised in that** the transmitter module (18) is provided with a wired or wireless interface (20) for the transmission of data to or from an external central station (21), which is in particular designed for the configuration of the valve assembly (10) and/or the electronic module (17).

5. Valve assembly according to any of the preceding claims, **characterised in that** means, in particular programming means, are provided for the generation of the valve data from the configuration programme for the control and/or configuration unit (19).

6. Valve assembly according to any of the preceding claims, **characterised in that** the signal triggering device comprises a control (35) in particular designed as a push-button on the electronic module (17) for triggering the transmission of the valve data or providing an overview over the valve data.

7. Valve assembly according to any of the preceding claims, **characterised in that** the signal triggering device comprises a control (29-34) in particular designed as a push-button on each valve (11-16) for triggering the transmission of the valve data assigned to the respective valve.

8. Valve assembly according to any of the preceding claims, **characterised in that** the signal triggering device comprises at least one control (28), in particular at least one push-button, on the portable indicating device (26) for triggering the transmission of the valve data assigned to the individual valves (11-16) or of all of the valve data.

9. Valve assembly according to any of the preceding claims, **characterised in that** its receiver module (18) is designed as a separate module or integrated into the electronic module (17).

10. Valve assembly according to any of the preceding claims, **characterised in that** the valves (11-16) are designed as banked valves, in particular as plate valves.

11. Valve assembly according to claim 10, **characterised in that** the electronic module (17) is mounted adjacent to the valves (11-16).

12. Valve assembly according to any of the preceding claims, **characterised in that** the valve data include one or more of the following data: actuator connected to the respective valve, sensor device connected to the respective valve, type and identification of the respective valve, configuration of the respective valve.

## Revendications

1. Ensemble de soupapes se composant de plusieurs soupapes, avec un dispositif de stockage électronique (23) pour des informations relatives aux soupapes, qui se trouve en liaison fonctionnelle avec un dispositif de transmission de données prévu pour transmettre les informations relatives aux soupapes à un appareil d'affichage (26) pourvu d'un écran (27) en tant que dispositif d'affichage pour les informations relatives aux soupapes, au moins un dispositif électrique de déclenchement de signaux (29 à 35, 28) étant prévu pour produire des signaux de déclenchement pour la transmission des informations relatives aux soupapes ou pour produire des informations relatives aux soupapes attribuées à des soupapes individuelles (11 à 16), et avec un module électronique (17) qui contient le dispositif de stockage (23) et un dispositif de commande et/ou de configuration (19) pour les soupapes (11 à 16), **caractérisé en ce que** l'ensemble de soupapes (10) possède un module d'émission (18) et l'appareil d'affichage (26) réalisé comme un appareil portable séparé du module électronique (17) possède un module de réception correspondant en tant que dispositif de transmission de données sans fil prévu pour la transmission sans fil des informations relatives aux soupapes.

2. Ensemble de soupapes selon la revendication 1, **caractérisé en ce que** le module d'émission (18) et le module de réception sont réalisés comme des modules d'émission/réception.

3. Ensemble de soupapes selon la revendication 1 ou 2, **caractérisé en ce que** le module d'émission (18) et le module de réception sont réalisés pour la transmission au moyen de signaux radio ou de signaux infrarouges ou de signaux bluetooth.

4. Ensemble de soupapes selon l'une des revendications précédentes, **caractérisé en ce que** le module d'émission (17) possède une interface (20) câblée ou sans fil prévue pour la transmission de données avec ou depuis un poste central externe (21), qui est réalisé notamment pour la configuration de l'ensemble de soupapes (10) et/ou du module électronique (17).

5. Ensemble de soupapes selon l'une des revendications précédentes, **caractérisé en ce que** sont prévus des moyens permettant de former les informations relatives aux soupapes à partir du programme de configuration pour le dispositif de commande et/ou de configuration (19), notamment des moyens du genre programme.

6. Ensemble de soupapes selon l'une des revendications précédentes, **caractérisé en ce que** le dispositif de déclenchement de signaux comporte, au niveau du module électronique (17), un élément de commande (35) réalisé notamment comme une touche de commande pour déclencher la transmission des informations relatives aux soupapes ou d'un aperçu concernant les informations relatives aux soupapes.

7. Ensemble de soupapes selon l'une des revendications précédentes, **caractérisé en ce que** le dispositif de déclenchement de signaux comporte, au niveau de chaque soupape (11 à 16), un élément de commande (29 à 34) réalisé notamment comme une touche de commande pour déclencher la transmission des informations relatives aux soupapes attribuées à la soupape respective.

8. Ensemble de soupapes selon l'une des revendications précédentes, **caractérisé en ce que** le dispositif de déclenchement de signaux comporte, au niveau de l'appareil d'affichage portable (26), au moins un élément de commande (28), notamment au moins une touche de commande, pour déclencher la transmission d'informations relatives aux soupapes attribuées aux soupapes individuelles (11 à 16) ou la transmission de toutes les informations relatives aux soupapes.

9. Ensemble de soupapes selon l'une des revendications précédentes, **caractérisé en ce que** son module d'émission (18) est réalisé comme un module séparé ou est intégré dans le module électronique (17).

10. Ensemble de soupapes selon l'une des revendications précédentes, **caractérisé en ce que** les soupapes (11 à 16) sont réalisées comme des soupapes disposées en série, notamment comme des soupapes en forme de plaques.

11. Ensemble de soupapes selon la revendication 10, **caractérisé en ce que** le module électronique (17) est aligné avec les soupapes (11 à 16).

12. Ensemble de soupapes selon l'une des revendications précédentes, **caractérisé en ce que** les informations relatives aux soupapes comportent une ou plusieurs des informations suivantes : l'actionneur connecté à la soupape respective, le dispositif de détection connecté à la soupape respective, le type et la caractéristique de la soupape respective, la configuration de la soupape respective.
